(19) **Europäisches Patentamt / European Patent Office / Office européen des brevets**

(11) **EP 1 788 164 B1**

(12) **EUROPEAN PATENT SPECIFICATION**

(45) Date of publication and mention
of the grant of the patent:
**04.04.2018 Bulletin 2018/14**

(51) Int Cl.:
**E04C 2/06** *(2006.01)*    **B32B 9/04** *(2006.01)*

(21) Application number: **06123808.5**

(22) Date of filing: **10.11.2006**

(54) **Reinforcement method for stone materials and reinforced slab**

Verfahren zur Verstärkung von Steinmaterialien und verstärkte Platte

Procédé pour le renfort de matériaux en pierre et dalle renforcée

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **10.11.2005 IT MI20052144**

(43) Date of publication of application:
**23.05.2007 Bulletin 2007/21**

(73) Proprietor: **Ardea Progetti & Sistemi S.R.L.
20123 Milano (IT)**

(72) Inventor: **Credali, Lino
40137, BOLOGNA (IT)**

(74) Representative: **Eterno, Enrico et al
Jacobacci & Partners S.p.A.
Piazza della Vittoria, 11
25122 Brescia (IT)**

(56) References cited:
**EP-A1- 0 859 085    EP-A1- 0 994 223**

**Description**

**FIELD OF THE INVENTION**

The invention relates to a reinforcement method for stone materials of marble and granite, and a reinforced slab of such material.

**PRIOR ART**

Slabs of granite, marble or other stone material are commonly used in constructions, also for decorative purposes. However, a limit of such slabs is represented by their fragility, combined to a heavy weight of the material. For this reason, the slabs must be considerably thick for confer appropriate strength so as to allow machining, handling and use in particular conditions, such as horizontal positioning and bending strength, both under the weight of the slab itself and in the presence of additional loads; this leads to a large consumption of material and a heavy weight of the slabs.

Granite slabs reinforced by applying fabrics on a face, in particular comprising fibreglass or high elastic modulus fibres, such as carbon or aramid fibres, by means of various resins, such as polyester, orthophtalic or isophthalic, and occasionally vinylester resins, have been proposed. The use of materials containing randomly oriented fibreglass does not provide a significant contribution to the mechanical properties and such materials often merely keep the slab together in the event of breakage. Also the use of fabrics containing fibreglass or high elastic modulus fibres applied by means of epoxy resins or other have not provided satisfactory results in terms of flexural strength, for various reasons, such as the low elastic modulus of fibreglass in relation to the elastic modulus of the material to be reinforced, and the non-perfect alignment of the fibres in the case of fabrics of the traditional type with weave and warp.

**SUMMARY**

The aforementioned problems have now been solved by means of a stone material reinforcement method comprising the application of a fabric to a slab of marble or granite of thickness 3 to 20 mm comprising a first series of carbon fibre threads arranged along a direction, a weft of threads comprising a thermoadhesive polymeric material and subjected to thermal bonding so as to fix said series of threads to said fabric.

Preferably, the weft threads are coated with thermoadhesive polymeric material, for example fibreglass, aramid fibre or other.

According to a preferred embodiment of the invention, the fabric comprises a second series of carbon fibre threads arranged along a second direction, preferably perpendicular to the first, said second series of threads not being interlaced to the first. Preferably, such second series is fixed by means of said threads coated with thermoadhesive polymeric material.

Application is performed preferably by depositing a layer of resin of appropriate type on said face of the stone slab, application of fabric impregnated with resin and its setting conducted in appropriate manner.

It is particular object of the invention the contents of the acpeendedclaims.

**LIST OF FIGURES**

Figures 1 a and 1b schematically show a plan view and a cross-sectional view of a fabric adapted to reinforce stone materials by means of a method according to the present invention.

Figures 2a and 2b schematically show a plan view and a cross-sectional view of a fabric adapted to reinforce stone materials by means of a method according to a further embodiment of the present invention.

**DETAILED DESCRIPTION OF A POSSIBLE EMBODIMENT OF THE INVENTION**

According to an embodiment of the invention, the method compriseses depositing a resin of appropriate type on a face of a stone slab, such as marble, granite or other inorganic material normally used for decorative and protective purposes; the resin may be selected, for example, among polyester resins of the orto-iso-terephtalic type, vinylester resin, phenolic resin, ureic resin, melaminic resin or polymeric thermoadhesive; epoxy resin is particularly preferred. The fabric, whose porosity is fit to absorb the resin, is applied to the resin layer and laminated. A further layer of resin may be applied after the fabric to improve impregnation. The resin is set in a known way according to the type of resin and may envisage, for example, the application of heat or radiation.

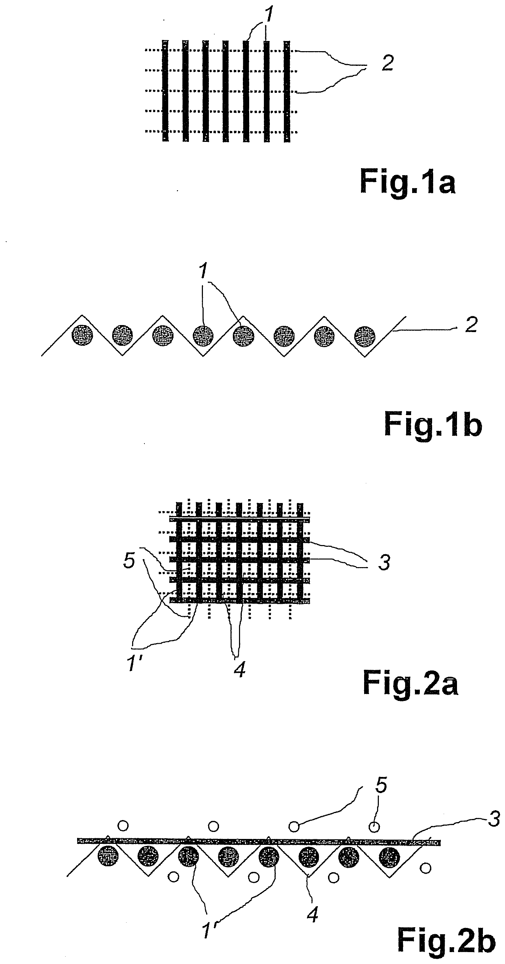

With reference to figures 1a and 1b, the fabric comprises a series of carbon fibre threads 1, which may form the warp of the fabric and a series of weft threads 2 intended to keep the carbon fibre threads together. The weft threads comprise a thermoadhesive material, and, by thermal bonding (application of heat to the fabric) bond with the warp threads, maintaining alignment. The weft threads may, according to an embodiment of the invention, comprise thermoplastic polymers with a melting temperature in the range from 40°C to 250°C, such as polyester polymers and copolymers, polyamides, oxymethylenics, vinylics, acrylics, hot melts, polyolefins, expoxies, polyurethanes, polystyrenes. The thermoplastic polymer may constitute the thread alone or in combination with other threads, such as fibreglass threads, aramid threads or of any other nature, for example the polymer may constitute the coating of the thread.

Carbon fibre threads may preferably have a modulus of elasticity E from 200 GPa and 800 GPa and any number of filaments, for example K3 (3000 filaments), K6 (6000 filaments), K 12 (12000 filaments). The carbon fibre weight of the fabric may be from 30 g/m$^2$ to 800 g/m$^2$, preferably from 50 g/m$^2$ to 500 g/m$^2$ and more preferably from 80 g/m$^2$ to 300 g/m$^2$. Adapted to the use according to the present invention are some fabrics marketed under the trademark Betontex made by Ardea Progetti e Sistemi S.r.l.. Unidirectional fabrics such as those in figure 1a and 1b, and the manufacturing method thereof are also described in application EP 0 994 223. Unidirectional fabrics such as those described confer to the slab flexural strength with respect to one axis only. Various layers of fabric may be applied, alternated to layers of resin to increase the strength of the material or to provide flexural strength according to different axes.

According to a preferred embodiment of the invention, bidirectional fabrics may be used, such as those in figure 2a and 2b. In addition to the threads 1' of the first series, they comprise a second series of carbon fibre threads 3 arranged in a different direction, preferably perpendicular with respect to that of the first series. The threads of the second series are not interlaced with those of the first series, but only with the weft threads 4 and 5. The weft may be modified, with respect to unidirectional fabrics, comprising weft threads 4 and 5 arranged in several directions, for example in two perpendicular directions and appropriately woven with the carbon fibre threads. According to a preferred embodiment, the threads of the first and second series lie with their axes on reciprocally parallel planes and are not interlaced, so as to be perfectly aligned and without undulations. They may be applied over a face of the slab similarly as seen above. The threads of the first and second series may be either the same or different, preferably they are the same. Thus, they confer to the slab a similar flexural strength with respect to all the axes parallel to the slab, which is particularly advantageous given that the slabs must be moved during processing and transport and must often be positioned horizontally.

Bidirectional fabrics adapted to the use according to an embodiment of the invention may also be selected among the fabrics marketed under the trademark Betontex made by Ardea Progetti e Sistemi S.r.l.. a peculiarity of such fabrics, with respect to fabrics of other type, is that the reinforcement fibres of the first and second series are not interlaced together, but only with threads coated with thermoadhesive polymeric material.

The invention also relates to a stone slab obtained with the method described above. Slabs of thickness (intended before the application of fabric) from 3 to 20 mm, more preferably from 4 to 14 mm can be prepared. The resulting slabs have high flexural strength, comparable to that of normal slabs also five times thicker, and tolerate considerable deformations without breaking.

In handling, it must obviously be considered that, if the reinforcement fabric is applied only to one side, which is obviously preferable given the common decorative and protective use of this type of material, the resistance to loads or to the action of its own weight will occur in one direction only.

EXAMPLES

30 cm long and 30 cm wide specimens were cut from various slabs of granite. The specimens were subjected to " three points flexural strength determination" being arranged on a test apparatus with supports distanced at 20 cm and their 30 cm side parallel to the distance between the supports. The load was applied in the middle, equally distanced from the supports on the upper face (the face arranged underneath being obviously the reinforced one, if present). The tensile strength F$_r$ and the vertical fracture strain f$_r$ (deflection) at the point of application of the load were determined. The results are shown in table 1. The flexural modulus of rupture Srf was calculated as:

$$S_{rf} = M/W \text{ (expressed in N/mm}^2\text{)}$$

where M=P*L/4 was the bending moment (in N*mm), P being the load (N) and L the distance between supports (in mm),
and where W=b*h$^2$/6 (expressed in mm$^3$), b being the width of the specimen (in mm) and h the thickness of the specimen (in mm). The results are shown in table 1.

In the following tests L=200mm and b=200mm.
Example 1: unidirectional thermal bonded fabric Betontex GV120 U-HT, consisting of 1.25 threads/cm of carbon yarn type 12 K 800Tex den, with a content of carbon fibre equal to 100 g/m$^2$, marketed by Ardea Progetti e Sistemi S.r.l.,

was applied to a 5.2 mm thick granite slab by means of two-component epoxy resin.

The slab was subjected to a bending test as described above, ensuring that the fibre was arranged on the lower face with respect to the face on which the load was applied and in direction parallel to the direction of the supports.

Example 2: A second 5.2 mm thick slab was reinforced by applying on one side of the slab, by means of epoxy resin, two layers of Betontex GV120 U-HT unidirectional fabric with a fibre carbon content equal to 100 g/m$^2$, reciprocally overlapped and orthogonal. Two reciprocally orthogonal specimens were obtained from this slab with longer side parallel to the fibres of either one or the other layer respectively.

Example 3: A third 5.2 mm thick slab was reinforced by applying on one side of the slab a layer of RC225 TH12 biaxial fabric, consisting of 1.25 threads/cm of a carbon yarn of the 12 K type 800Tex fibre weight, in directions 0° and 90° degrees, with a total carbon fibre content equal to 200 g/m$^2$, marketed by Ardea Progetti e Sistemi S.r.l., by means of two-component epoxy resins.

Two reciprocally orthogonal specimens were obtained from this slab, with long side parallel to either one or the other series of carbon fibre threads.

Comparative example 4: a non-reinforced specimen is cut from a 6,4 mm thick slab

Comparative example 5: a non-reinforced specimen is cut from a 21.6 mm thick slab

Comparative example 6: a non-reinforced specimen is cut from a 32.2 mm thick slab

It may be observed that the ultimate bending loads of 5.2 mm thick reinforced specimens is intermediate between that of a 21 mm thick slab and that of a 32 mm thick slab.

Table 1

| Example | Thickness h (mm) | Direction of reinforcement fibre (0°-90°) | Maximum load $F_r$ (N) | Deflection $f_r$ (mm) | Modulus of rupture $S_{rf}$ (N/mm$^2$) |
|---|---|---|---|---|---|
| 1 | 5.2 | 0° | 4250 | 10 | 235.7 |
| 2 | 5.2 | 0°<br>90° | 4350<br>4420 | 11.2<br>10.8 | 241.3<br>245.2 |
| 3 | 5.2 | 0°<br>90° | 4810<br>4825 | 11.8<br>12.5 | 266.8<br>267.7 |
| 4* | 6.4 | None | 290 | 0.99 | 10.4 |
| 5* | 21.6 | None | 3790 | 0.87 | 12.2 |
| 6* | 32.2 | None | 8630 | 0.77 | 12.5 |
| * Comparative example | | | | | |

**Claims**

1. A stone material reinforcement method comprising the application to a slab of said material of a thermal bonded fabric comprising a warp made of a first series of carbon fibre threads arranged along a first direction and a weft of threads comprising a thermoadhesive polymeric material;
   said stone material being **characterized in that** the slab of said material has thickness from 3 to 20 mm, and **in that** the slab is of marble or granite.

2. A method according to claim 1, **characterised in that** the fabric comprises a second series of carbon fibre threads arranged along a second direction, said second series of threads not being interlaced to the first.

3. A method according to claim 2, **characterised in that** the threads of the second series are arranged according to a direction perpendicular to that of the first.

4. A method according to any of the preceding claims, **characterised in that** it comprises the deposition of a layer of resin of appropriate type on a face of the stone slab, application of fabric with impregnation thereof with said resin and setting of said performed in an appropriate way.

5. A method according to claim 4, **characterised in that** it comprises the application of a plurality of layers of fabric alternated to layers of resin.

**6.** A method according to any claim from 4 to 5, **characterised in that** said resin is of the epoxy type.

**7.** A method according to any of the preceding claims, **characterised in that** the carbon fibre threads have a modulus of elasticity E from 200 GPa to 800 Gpa.

**8.** A method according to any of the preceding claims, **characterised in that** the fabric has a carbon fibre weight from 50 to 500 g/m$^2$ and preferably from 80 to 300 g/m$^2$.

**9.** A method according to any of the preceding claims, **characterised in that** the weft thread is a fibreglass or aramid fibre thread coated with a thermoadhesive plastic material.

**10.** A method according to any of the preceding claims, **characterised in that** the slab is from 4 to 14 mm thick.

**11.** A reinforced slab of stone material obtainable by the method according to any of the preceding claims.

**Patentansprüche**

**1.** Verfahren zur Verstärkung von Steinmaterial umfassend
das Aufbringen eines thermisch gebundenen Fasergewebes auf eine Platte des Materials, wobei das thermisch gebundene Fasergewebe aus Kettfäden aus einer ersten Serie von Kohlefaserfäden, die entlang einer ersten Richtung angeordnet sind, und aus Schussfäden, die einen thermoadhäsiven Polymerwerkstoff umfassen, hergestellt ist; wobei das Steinmaterial **dadurch gekennzeichnet ist, dass** die Platte aus diesem Material eine Dicke von 3 bis 20 mm aufweist und dass die Platte aus Marmor oder Granit besteht.

**2.** Verfahren gemäß Anspruch 1, **dadurch gekennzeichnet, dass** das Gewebe eine zweite Serie von Kohlefaserfäden umfasst, die entlang einer zweiten Richtung angeordnet sind, wobei die zweite Serie von Fäden nicht mit der ersten verwoben ist.

**3.** Verfahren gemäß Anspruch 2, **dadurch gekennzeichnet, dass** die Fäden der zweiten Serie in einer Richtung, die zu der der ersten rechtwinklig angeordnet ist, ausgerichtet sind.

**4.** Verfahren nach einem der vorangehenden Ansprüche, **dadurch gekennzeichnet, dass** es das Aufbringen einer Schicht aus Harz eines geeigneten Typs auf einer Fläche der Steinplatte, das Aufbringen des Gewebes bei Imprägnieren mit dem Harz und das Ausführen des Aushärtens in einer geeigneten Weise umfasst.

**5.** Verfahren gemäß Anspruch 4, **dadurch gekennzeichnet, dass** es das Aufbringen einer Mehrzahl von Lagen des Gewebes, die sich mit Lagen von Harz abwechseln, umfasst.

**6.** Verfahren nach einem der vorangehenden Ansprüche 4 bis 5, **dadurch gekennzeichnet, dass** das Harz ein Epoxidharz ist.

**7.** Verfahren nach einem der vorangehenden Ansprüche, **dadurch gekennzeichnet, dass** die Kohlefaserfäden einen Elastizitätsmodul E von 200 GPa bis 800 GPa aufweisen.

**8.** Verfahren nach einem der vorangehenden Ansprüche, **dadurch gekennzeichnet, dass** das Gewebe ein Kohlefasergewicht von 50 bis 500 g/m$^2$ und vorzugsweise von 80 bis 300 g/m$^2$ aufweist.

**9.** Verfahren nach einem der vorangehenden Ansprüche, **dadurch gekennzeichnet, dass** der Schussfaden ein Glasfaserfaden oder ein Aramidfaserfaden ist, der mit einem thermoadhäsiven Plastikwerkstoff beschichtet ist.

**10.** Verfahren nach einem der vorangehenden Ansprüche, **dadurch gekennzeichnet, dass** die Platte eine Dicke von 4 bis 14 mm aufweist.

**11.** Eine verstärkte Platte eines Steinmaterials, die durch das Verfahren nach einem der vorangehenden Ansprüche erzielbar ist.

**Revendications**

1.  Procédé pour le renfort de matériau en pierre comprenant l'application à une dalle dudit matériau d'un tissu collé thermiquement comprenant une chaîne constituée d'une première série de fils de fibre de carbone disposés le long d'une première direction et une trame de fils comprenant un matériau polymère thermoadhésif ;
    ledit matériau en pierre étant **caractérisé en ce que** la dalle dudit matériau présente une épaisseur de 3 à 20 mm, et **en ce que** la dalle est en marbre ou granite.

2.  Procédé selon la revendication 1, **caractérisé en ce que** le tissu comprend une seconde série de fils de fibre de carbone disposés le long d'une seconde direction, ladite seconde série de fils n'étant pas entrelacée à la première.

3.  Procédé selon la revendication 2, **caractérisé en ce que** les fils de la seconde série sont disposés selon une direction perpendiculaire à celle de la première.

4.  Procédé selon l'une quelconque des revendications précédentes, **caractérisé en ce qu'**il comprend le dépôt d'une couche de résine de type approprié sur une face de la dalle de pierre, l'application de tissu avec l'imprégnation de celle-ci avec ladite résine et le durcissement de ladite réalisé de manière appropriée.

5.  Procédé selon la revendication 4, **caractérisé en ce qu'**il comprend l'application d'une pluralité de couches de tissu alternées avec des couches de résine.

6.  Procédé selon l'une quelconque des revendications 4 à 5, **caractérisé en ce que** ladite résine est du type époxy.

7.  Procédé selon l'une quelconque des revendications précédentes, **caractérisé en ce que** les fils de fibre de carbone présentent un module d'élasticité E entre 200 GPa et 800 GPa.

8.  Procédé selon l'une quelconque des revendications précédentes, **caractérisé en ce que** le tissu présente un poids de fibre de carbone de 50 à 500 g/m$^2$ et de préférence de 80 à 300 g/m$^2$.

9.  Procédé selon l'une quelconque des revendications précédentes, **caractérisé en ce que** le fil de trame est un fil de fibre de verre ou fibre d'aramide revêtu d'un matériau plastique thermoadhésif.

10. Procédé selon l'une quelconque des revendications précédentes, **caractérisé en ce que** la dalle présente une épaisseur de 4 à 14 mm.

11. Dalle renforcée de matériau en pierre pouvant être obtenue par le procédé selon l'une quelconque des revendications précédentes.

**Fig.1a**

**Fig.1b**

**Fig.2a**

**Fig.2b**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0994223 A